# EUROPÄISCHE PATENTSCHRIFT

(11) **EP 3 308 625 B1**
(45) Veröffentlichungstag und Bekanntmachung des Hinweises auf die Patenterteilung: **22.04.2020**
(21) Anmeldenummer: 17200993.8
(22) Anmeldetag: 07.11.2013
(51) Int. Cl.: A01D 78/10

(54) **HEUWERBUNGSMASCHINE**
HAY MAKING MACHINE
MACHINE DE FENAISON

(30) Priorität: 09.11.2012 DE 202012010746 U
(43) Veröffentlichungstag der Anmeldung: 18.04.2018
(62) Teilanmeldung aus: 13005252.5
(73) Patentinhaber: PÖTTINGER Landtechnik GmbH, 4710 Grieskirchen (AT)
(72) Erfinder: Zauner, Günter, 4675 Weibern (AT)
(74) Vertreter: Thoma, Michael

(56) Entgegenhaltungen:
- DE-A1- 2 418 210
- DE-A1- 2 456 383
- DE-A1- 3 208 246
- DE-A1- 3 610 545
- DE-A1- 3 831 163

## Beschreibung

Die vorliegende Erfindung betrifft eine Heuwerbungsmaschine, insbesondere in Form eines Kreiselschwaders, mit zumindest einem um eine aufrechte Rechradachse umlaufend antreibbaren Rechrad, das durch ein Tastfahrwerk am Boden abgestützt ist, das einen Gleitteller zur flächigen Abstützung aufweist.

Eine solche Heuwerbungsmaschine ist aus der DE 24 56 383 A1 bekannt, bei der unter dem Rechrad ein Gleitteller zur flächigen Abstützung am Boden vorgesehen ist.

Um bei Kreiselschwadern oder Kreiselzettern zu verhindern, dass die Rechzinken beim Überfahren von Bodenwellen in den Boden graben, wurde bereits vorgeschlagen, dem Rechrad ein Tastrad zuzuordnen, das in einem in Fahrtrichtung betrachtet vorderen Sektor des Rechrads vor diesem herläuft bzw. auch innerhalb der von den Rechzinken beschriebenen Umlaufbahn knapp hinter den Rechzinken angeordnet sein kann. Die Schrift DE 200 18 109 U1 zeigt einen Kreiselschwader mit einem solchen innenliegenden Tastrad, während die Schriften DE 203 12 730 U1 oder DE 10 2004 002 384 Schwader mit außerhalb der Umlaufbahn angeordneten Tasträdern zeigen. Ferner wurde in der Schrift DE 20 2009 003 771 U1 bereits vorgeschlagen, ein solches Tastrad an einem verschwenkbaren Tastradträger zu montieren, so dass das Tastrad in verschiedenen Sektoren vor dem Rechrad herlaufen kann. Durch eine solche Tastradverstellung lässt sich die Fahrspur des Tastrads verändern, wodurch insbesondere bei Kreiselschwadern mit mehreren Rechrädern keine Kollision des Tastrads mit zuvor erzeugten Schwaden eintritt, wenn der Schwader wahlweise einen Einzelschwad oder einen Doppelschwad erzeugt.

Ein solches einzelnes Tastrad ist jedoch problematisch, wenn Bodenunebenheiten nicht nur gleichmäßige Querwellen beinhalten, sondern über die Arbeitsbreite des Rechkreisels ungleichmäßig ausgebildet sind, beispielsweise in Form von Schrägen oder mehr oder weniger in Fahrtrichtung verlaufenden Längswellen ausgebildet sind. Hierbei kommt es dazu, dass das Tastrad in einer Senke läuft und keine anhebende Wirkung mehr erzielt, während die Rechzinken in eine neben der Fahrspur des Tastrads auftretenden Bodenkuppe einstechen. Um diesen Effekt zu mildern und eine bessere Bodenanpassung auch bei über die Arbeitsbreite ungleichmäßigen Bodenunebenheiten zu erzielen, schlägt die Schrift DE 10 2004 002 384 A1 vor, zwei quer zur Fahrtrichtung voneinander beabstandete Tasträder vor dem Rechkreisel anzuordnen und ein drittes Tastrad mittig hinter dem Rechkreisel herlaufen zu lassen. Ein solches Tastfahrwerk ist jedoch wiederum hinsichtlich Kollisionen mit bereits zusammengerechten Erntegutschwaden problematisch, insbesondere bei Schwadern mit mehreren Rechkreiseln, die wahlweise Einzelschwade oder Mehrfachschwade erzeugen.

Der vorliegenden Erfindung liegt daher die Aufgabe zugrunde, eine verbesserte Heuwerbungsmaschine der eingangs genannten Art zu schaffen, die Nachteile des Standes der Technik vermeidet und Letzteren in vorteilhafter Weise weiterbildet. Insbesondere soll eine verbesserte Bodenanpassung auch bei quer zur Fahrtrichtung ungleichmäßigen Bodenunebenheiten erzielt werden, die ein Einstechen der Rechzinken besser vermeidet, ohne dies mit einer erhöhten Neigung des Tastfahrwerks zum Verheddern am bereits geschwadeten oder noch zusammenzurechenden Erntegut zu erkaufen.

Erfindungsgemäß wird die genannte Aufgabe durch eine Heuwerbungsmaschine gemäß Anspruch 1 gelöst. Bevorzugte Ausgestaltungen der Erfindung sind Gegenstand der abhängigen Ansprüche.

Es wird also vorgeschlagen, das zumindest eine Rechrad großflächig am Boden abzustützen, so dass ein Einsacken des Tastfahrwerks in Längsrillen oder ähnlich ungleichmäßigen Bodenunebenheiten vermieden wird. Das Tastfahrwerk umfasst einen Gleitteller zur flächigen Abstützung am Boden. Bei ausreichend breiter Ausbildung des Gleittellers quer zur Fahrtrichtung kann eine deutlich verbesserte Bodenanpassung und Überbrückung von Bodenlöchern, Gräben in Fahrtrichtung und auch Gräben quer zur Fahrtrichtung erzielt werden, wobei auch bei weichen Böden die Gefahr des punktuellen Einsinkens, wie sie bei einzelnen Tasträdern besteht, vermieden werden kann. Erfindungsgemäss umfasst das Tastfahrwerk zusätzlich zum Gleitteller zumindest ein über die Aufstandsfläche des Gleittellers nach unten vorstehendes Tastrad.

Der genannte Gleitteller kann hierbei grundsätzlich unterschiedlich konturiert sein, beispielsweise in Form einer bogenförmig konturierten, insbesondere kreisförmigen oder halbkreisförmigen Platte ausgebildet sein oder auch eine geschlossene Ringform besitzen. In vorteilhafter Weiterbildung der Erfindung kann insbesondere vorgesehen sein, dass sich der genannte Gleitteller bogenförmig um die Rechradachse herum erstreckt und/oder eine in der Draufsicht sichel- oder U-förmige Konturierung besitzt. Dabei kann sich der genannte Gleitteller insbesondere in bzw. über einen Sektor erstrecken, der vor der aufrechten Rechradachse liegt und/oder eine durch die Rechradachse gehende Fahrtrichtungsgerade einschließt.

In Weiterbildung der Erfindung besitzt der genannte Gleitteller dabei eine Breite, die zumindest der Hälfte des Innendurchmessers der von den Rechzinken des Rechrads beschriebenen Umlaufbahn entspricht. Das genannte Rechrad kann dabei üblicherweise umlaufende Tragarme besitzen, an denen nicht nur jeweils ein einzelner Rechzinken, sondern mehrere voneinander beabstandete Rechzinken angeordnet sind, sodass die von den Rechzinken beschriebene Umlaufbahn ein Kreisring bestimmter Dicke ist. Der am weitesten innen, d.h. am nächsten zur Rechradachse angeordnete Rechzinken definiert dabei den genannten Innendurchmesser der Umlaufbahn, während der am weitesten außen angeordnete, d.h. von der Rechradachse am weitesten beabstandete Rechzinken den äußeren Durchmesser der Umlaufbahn definiert.

Der genannte Gleitteiler ist insbesondere innenliegend, d.h. innerhalb der von den Rechzinken des Rechrads beschriebenen Umlaufbahn angeordnet. Hierdurch kann jegliche Kollision mit dem zusammenzurechenden bzw. bereits geschwadeten Erntegut vermieden werden, da das Rechrad dem Gleitteller vorauslaufend das Erntegut zusammenrecht bzw. wegrecht, bevor der Gleitteller den entsprechenden Bodenabschnitt überfährt. Grundsätzlich wäre es aber auch möglich, den genannten Gleitteller außerhalb der Umlaufbahn der Rechzinken anzuordnen, insbesondere dem Rechrad vorauslaufend und/oder nachlaufend, wobei auch in diesem Fall im Vergleich zu einem Einzeltastrad die Neigung zum Verheddern am Erntegut reduziert wäre, da der Gleitteller großflächig und damit sanft über das noch zusammenzurechende Erntegut gleitet. Bevorzugt ist jedoch die genannte innenliegende Anordnung, da hier jegliche Neigung zum Verheddern am Erntegut vermieden wird und auch unabhängig von Einfach- und Mehrfachschwaden bei mehreren Rechkreiseln bereits zusammengerechte Schwaden nicht niedergedrückt werden.

Ist der genannte Gleitteller wie beschrieben innenliegend angeordnet, kann in vorteilhafter Weiterbildung der Erfindung die Breite des Gleittellers quer zur Fahrtrichtung vorteilhafterweise etwa 75% bis 99% des zuvor genannten Innendurchmessers der von den Rechzinken beschriebenen Umlaufbahn des Rechrads betragen. Um eine möglichst vollständige Erfassung von Bodenunregelmäßigkeiten und eine Abstützung auch bei singulären Bodenlöchern und dergleichen zu erreichen, kann sich der Gleitteller unter Einhaltung einer ausreichenden Kollisionstoleranz im Wesentlichen über den gesamten Innendurchmesser der Umlaufbahn der Rechradzinken erstrecken.

In vorteilhafter Weiterbildung der Erfindung kann sich der Gleitteller dabei über einen Sektor des Rechradkreises erstrecken, der eine durch die Rechradachse gehende Fahrtrichtungsgerade einschließt, insbesondere hierzu symmetrisch ausgebildet ist, und sich über zumindest 90° erstreckt, d.h. einen nach vorne gerichteten Viertelkreissektor überdeckt. In vorteilhafter Weiterbildung der Erfindung kann sich der genannte Gleitteller auch noch über einen größeren Sektor erstrecken, beispielsweise über mehr als 120°, wobei der Gleitteller vorzugsweise auch 180° um die Rechradachse herum oder auch einen noch größeren Sektor abdecken kann.

Um die Flächenpressung an der Bodenaufstandsfläche zu reduzieren bzw. auch bei stärkeren Bodenunebenheiten eine ausreichend große Aufstandsfläche zu erzielen, kann der Gleitteller eine Aufstandsfläche besitzen, deren Größe mindestens 20% der vom Rechrad einbeschriebenen Innenkreisfläche beträgt. Innenkreisfläche meint dabei die Kreisfläche, deren Durchmesser von der Umlaufbahn des innersten Rechzinken definiert wird. Je nach Konturierung des Gleittellers kann dessen Aufstandsfläche auch deutlich größer sein.

Die die Aufstandsfläche bildende Unterseite des Gleittellers kann dabei grundsätzlich verschieden ausgebildet sein, wobei in vorteilhafter Weiterbildung der Erfindung die genannte Unterseite eine im Wesentlichen ebene Aufstandsfläche bilden kann, die vorteilhafterweise randseitig, insbesondere in Fahrtrichtung vorne liegenden Randabschnitten, angeschrägt und/oder aufgebogen sein kann, um sanfter über den Boden zu gleiten und ein Einstechen an Bodenkonturkanten zu vermeiden.

Der Gleitteller bzw. dessen Aufstandsfläche kann hierbei einstückig ausgebildet sein, gegebenenfalls aber auch mehrstückig ausgebildet sein bzw. mehrere Aufstandsflächenabschnitte umfassen bzw. hieraus zusammengesetzt sein, wobei in vorteilhafter Weiterbildung der Erfindung solche mehreren Aufstandsflächenstücke vorteilhafterweise auf selbem Niveau angeordnet sind bzw. in einer gemeinsamen Ebene liegen können. Beispielsweise kann der Gleitteller aus zwei oder auch mehreren bogenförmigen Gleittellerabschnitten zusammengesetzt sein, zwischen denen beispielsweise spaltförmige Aussparungen vorgesehen sein können.

Alternativ oder zusätzlich kann die Unterseite des Gleittellers auch mit einem oder mehreren Verschleißelementen versehen sein, beispielsweise in Form von gegenüber der restlichen Aufstandsfläche nach unten vorspringenden, in Fahrtrichtung weisenden Verschleißleisten beispielsweise aus Kunststoff, die an einem beispielsweise plattenförmigen Grundkorpus des Gleittellers vorteilhafterweise lösbar bzw. austauschbar angebracht sein können. Gegebenenfalls kann ein solches Verschleißelement auch ein flächig durchgehendes oder mehrere größere Flächenstücke umfassendes, vorzugsweise plattenförmiges Verschleißelement sein, welches auf der Unterseite des Grundkorpus des Gleittellers aufgebracht, insbesondere auswechselbar angebracht sein kann, beispielsweise in Form einer Kunststoffbeschichtung bzw. Kunststoffplatte.

Das eine oder die mehreren Tasträder können aus der Unterseite des Gleittellers heraus nach unten vortreten, beispielsweise im Bereich von Gleittelleraussparungen angeordnet sein, so wie dies beispielsweise in ähnlicher Art bei Wasser- bzw. Amphibienflugzeugen oder kombinierten Gleitski-/Radfahrwerken an Flugzeugen bekannt ist. Bei der kombinierten Gleitteller-/Tastrad-Fahrwerksausbildung läuft bei ebenem Boden nur das Tastrad bzw. die mehreren Tasträder am Boden, während der Gleitteller keinen oder nur geringfügigen Bodenkontakt hat. Fährt indes das Tastrad in ein Loch oder eine Längsrille, fängt die Aufstandsfläche des Gleittellers ein Einsinken ab bzw. erlangt Bodenkontakt und führt das Rechrad sicher über die entsprechende Bodenunebenheit.

Der genannte Gleitteller des Tastfahrwerks kann bezüglich des Rechrads bzw. bezüglich des Rechradaggregats - das Rechrad läuft natürlich um - starr angeordnet bzw. aufgehängt sein, um Bodenunebenheiten verzögerungsfrei abzutasten und in entsprechende Höhenbewegungen des Rechrads umzusetzen. In alternativer Weiterbildung der Erfindung kann der genannte Gleitteller jedoch auch nachgiebig, insbesondere elastisch aufgehängt sein, beispielsweise durch eine Gummielementlagerung, sodass Stöße am Gleitteller absorbiert werden können und ein insgesamt ruhigerer Lauf der Heuwerbungsmaschine erreicht wird.

Die Aufhängung des Gleittellers kann dabei in vorteilhafter Weiterbildung der Erfindung mehrere Abstützpunkte am Gleitteller umfassen, vorteilhafter Weise zumindest zwei Abstützpunkte rechts und links von der Rechradachse und zumindest einen Abstützpunkt vor der Rechradachse.

Die Erfindung wird nachfolgend anhand eines bevorzugten Ausführungsbeispiels und zugehöriger Zeichnungen näher erläutert. In den Zeichnungen zeigen:
- Fig. 1:: eine schematische, ausschnittsweise Seitenansicht einer Heuwerbungsmaschine in Form eines Kreiselschwaders nach einer vorteilhaften Ausführung der Erfindung, die den Gleitteller des Tastfahrwerks eines Rechkreisels von der Seite her zeigt,
- Fig. 2:: eine Frontansicht des Rechkreisels des Kreiselschwaders aus Fig. 1,
- Fig. 3:: eine Draufsicht auf den Rechkreisel aus den vorhergehenden Figuren, die die bogenförmige Konturierung des Gleittellers des Tastfahrwerks innerhalb der Umlaufbahn der Rechzinken zeigt, und
- Fig. 4:: eine perspektivische Darstellung des Rechkreisels aus den vorhergehenden Figuren schräg von vorne oben.

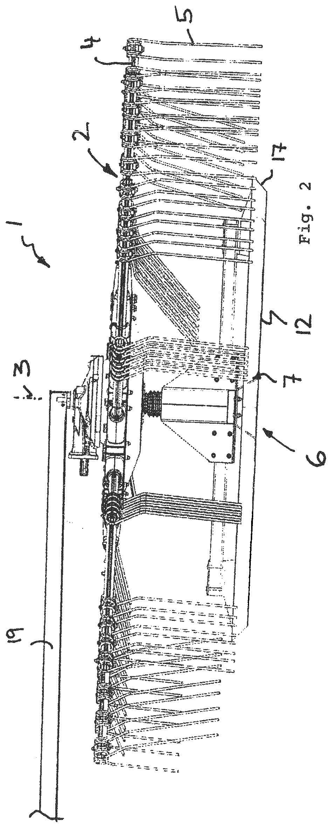

Der in den Figuren gezeigte Kreiselschwader 1 besitzt einen Maschinenrahmen, mit dem der Kreiselschwader in an sich bekannter Weise an einen Schlepper ankuppelbar ist, beispielsweise mittels einer Deichsel oder einer Mehrpunktanlenkung, wobei der Maschinenrahmen beispielsweise durch ein heckseitig angeordnetes Fahrwerk am Boden abgestützt sein kann. An dem genannten Maschinenrahmen ist ein Rechkreisel 2 gelagert, beispielsweise durch den in Fig. 2 gezeigten Tragarm, der an dem genannten Maschinenrahmen um eine liegende, beispielsweise in Fahrtrichtung weisende Achse schwenkbar angelenkt sein kann, um den Rechkreisel 2 in eine Vorgewende- und Transportstellung ausheben zu können.

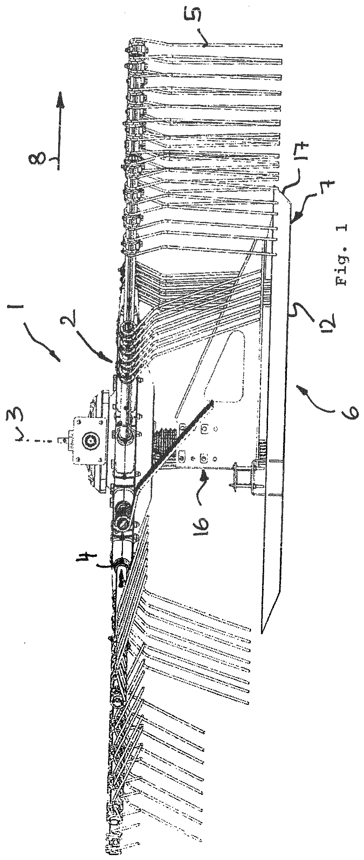

Wie die Figuren 1-4 zeigen, besitzt der Rechkreisel 2 eine Vielzahl von Rechzinken 5, die an Tragarmen 19 befestigt sind, welche radial zu einer aufrechten Rechradachse 3 angeordnet sind, um die die genannten Tragarme 4 umlaufend antreibbar sind. In an sich bekannter Weise werden die Tragarme 4 und damit die daran befestigten Rechzinken 5 auf ihrer Umlaufbahn um die Rechradachse 3 zyklisch verdreht, so dass die Rechzinken 5 in einem vorbestimmten Sektor über den Boden rechen und im restlichen Teil der Umlaufbahn vom Boden weggeschwenkt sind. Hierdurch streifen die Rechzinken 5 einerseits zum Zusammenrechen des Ernteguts dicht über den Boden, während sie andererseits im Bereich des schon zusammengerechten Schwads nach oben klappen, um das Erntegut im Schwad abzulegen.

Unter dem Rechkreisel 2 ist zur Abstützung desselbigen am Boden ein Tastfahrwerk 6 vorgesehen, das innerhalb der Umlaufbahn 9 der Rechzinken 5 einen Gleitteller 7 aufweist, der den Rechkreisel 2 großflächig am Boden abstützen kann.

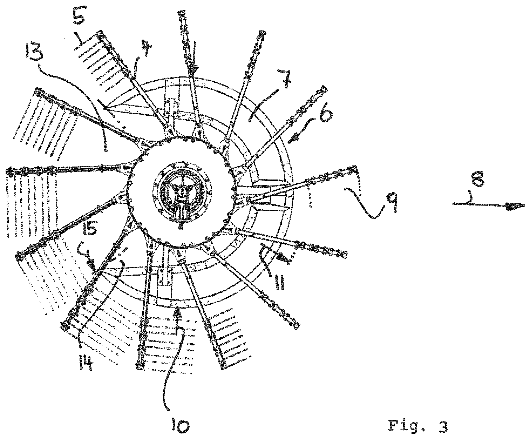

Wie insbesondere Fig. 3 zeigt, kann der genannte Gleitteller 7 bogenförmig gekrümmt ausgebildet sein, insbesondere U-förmig bzw. mondsichelförmig konturiert sein, so dass sich der Gleitteller 7 in dem in Fahrtrichtung 8 betrachtet vor der Rechradachse 3 liegenden Abschnitt des Innendurchmessers 7 des Rechkreisels 2 um die genannte Rechradachse 3 herum erstreckt. Der genannte Gleitteller 7 kann hierbei einstückig oder auch mehrteilig ausgebildet sein, beispielsweise aus zwei Viertelkreisstücken zusammengesetzt sein.

Wie Fig. 3 zeigt, kann die Breite 10 des Gleittellers 7 im Wesentlichen dem Innendurchmesser 11 der Umlaufbahn 9 der Rechzinken 5 entsprechen bzw. geringfügig kleiner ausgebildet sein, um Kollisionen zwischen den Rechzinken 5 und dem Gleitteller 7 zu vermeiden. Durch eine solche möglichst vollständige Ausnutzung der im Innenbereich des Rechkreisels 2 zur Verfügung stehenden Breite kann eine besonders breite und damit effektive Abstützung erreicht werden, die auch bei unregelmäßig konturierten Bodenunebenheiten ein Einstechen der Rechzinken 5 sicher vermeidet.

Wie die Figuren 1, 2 und 4 zeigen, kann der genannte Gleitteller 7 an seinem Rand, insbesondere seinem in Fahrtrichtung nach vorne weisenden Randabschnitt, aber ggf. auch an seinem nach hinten weisenden Randabschnitt eine Randaufbiegung 17 bzw. -anschrägung umfassen, um leichter über Bodenunebenheiten hinweg gleiten zu können.

Um das Ansammeln von Erntegut in dem leicht schalenförmig aufgebogenen Gleitteller 7 zu vermeiden, kann die Unterschale des Gleittellers 7 durch einen Deckel verschlossen sein. Insbesondere kann der Gleitteller bombiert ausgebildet sein.

Bei der in Fig. 3 gezeigten Ausführung, erstreckt sich der bogenförmig konturierte Gleitteller 7 über einen Sektor 14, der eine durch die Rechradachse 3 gehende Fahrtrichtungsgerade 8 einschließt und sich über einen Winkel 15 von etwa 240° erstreckt. Je nach Konturierung des Gleittellers 7 und von den Bodenverhältnissen benötigte Abstützung können hier jedoch auch andere Formgebunden vorgesehen sein.

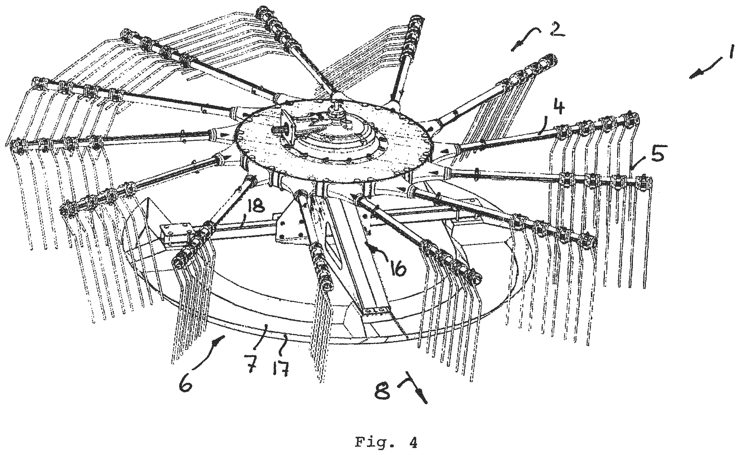

Wie Fig. 2 und 4 zeigen, kann der Gleitteller 7 mittels einer Gleittelleraufhängung 16 am Zentralkorpus des Rechkreises 2 abgestützt sein, wobei die genannte Gleittelleraufhängung 16 vorteilhafterweise mehrere Abstützpunkte am Gleitteller 7 besitzen kann, beispielsweise mittels Stützarmen 18, die vor sowie seitlich rechts und links von der Rechradachse 3 Abstützpunkte für den Gleitteller 7 bilden.

Die genannte Gleittelleraufhängung 16 kann dabei starr, ggf. aber auch nachgiebig, insbesondere elastisch ausgebildet sein, beispielsweise durch Verwendung von Gummilagerelementen zwischen den genannten Stützarmen 18 und dem Gleitteller 17 und/oder zwischen den Stützarmen 18 und dem Rechkreiselkorpus.

## Patentansprüche

1. Heuwerbungsmaschine, insbesondere Kreiselschwader, mit zumindest einem um eine aufrechte Rechradachse (3) umlaufend antreibbaren Rechrad (2), das durch ein Tastfahrwerk (6) am Boden abgestützt ist, das einen Gleitteller (7) zur flächigen Abstützung am Boden aufweist, **dadurch gekennzeichnet, dass** an der Unterseite des Gleittellers (7) zumindest ein über die Aufstandsfläche (12) des Gleittellers (7) nach unten vorstehendes Tastrad vorgesehen ist.

2. Heuwerbungsmaschine nach dem vorhergehenden Anspruch, wobei der Gleitteller (7) sich innerhalb der vom genannten Rechrad (2), insbesondere von dessen Rechzinken (5), beschriebenen Umlaufbahn (9) erstreckt.

3. Heuwerbungsmaschine nach einem der vorhergehenden Ansprüche, wobei der Gleitteller (7) sich bogenförmig um die Rechradachse (2) herum erstreckt und/oder eine in der Draufsicht sichel- oder U-förmige Konturierung besitzt.

4. Heuwerbungsmaschine nach einem der vorhergehenden Ansprüche, wobei der Gleitteller (7) quer zur Fahrtrichtung (8) eine Breite (10) besitzt, die zumindest 50%, vorzugsweise 70% bis 99% des Innendurchmessers (11) der von dem Rechrad (2) beschriebenen Umlaufbahn (9) beträgt.

5. Heuwerbungsmaschine nach einem der vorhergehenden Ansprüche, wobei der Gleitteller (7) eine Aufstandsfläche (12) besitzt, deren Größe zumindest 20% der vom Rechrad (2) einbeschriebenen Innenkreisfläche (13) beträgt.

6. Heuwerbungsmaschine nach einem der vorhergehenden Ansprüche, wobei der Gleitteller (7) sich über einen Sektor (14) des Umlaufkreises des Rechrads (2) erstreckt, der die durch die Rechradachse (3) gehende Fahrtrichtungsgerade (8) einschließt und sich über einen Winkel (15) von zumindest 90°, vorzugsweise mehr als 120° erstreckt.

7. Heuwerbungsmaschine nach einem der vorhergehenden Ansprüche, wobei die Unterseite des Gleittellers (7) eine im Wesentlichen ebene Aufstandsfläche (12) bildet, die gegebenenfalls eine randseitige Anschrägung und/oder randseitige Aufbiegung zur Vermeidung von Einstechen aufweist.

8. Heuwerbungsmaschine nach einem der vorhergehenden Ansprüche, wobei die Aufstandsfläche (12) des Gleittellers (7) durchgehend und/oder einstückig ausgebildet ist.

9. Heuwerbungsmaschine nach einem der Ansprüche 1 bis 7, wobei die Aufstandsfläche (12) des Gleittellers (7) mehrteilig ausgebildet ist.

10. Heuwerbungsmaschine nach einem der vorhergehenden Ansprüche, wobei an der Unterseite des Gleittellers (7) Verschleißelemente vorzugsweise in Form von Gleitleisten vorgesehen sind.

11. Heuwerbungsmaschine nach einem der vorhergehenden Ansprüche, wobei der Gleitteller (7) mehrteilig ausgebildet ist und eine Bodenplatte und ein die Bodenplatte nach oben abdeckendes Deckelteil umfasst.

12. Heuwerbungsmaschine nach einem der vorhergehenden Ansprüche, wobei der Gleitteller (7) nachgiebig, insbesondere elastisch, aufgehängt ist, wobei eine Gleittelleraufhängung (16) vorzugsweise Aufhängungspunkte seitlich rechts und links und vor der Rechradachse (3) umfasst.

## Claims

1. Hay-making machine, in particular a rotary swather, comprising at least one rake wheel (2) that is drivable in a rotary manner about an upright rake wheel axis (3) and that is supported on the ground by a contact chassis (6) that has a sliding plate (7) for an areal support at the ground, **characterized in that** at least one jockey wheel projecting downwardly beyond the contact patch (12) of the sliding plate (7) is provided at the lower side of the sliding plate (7).

2. Hay-making machine in accordance with the preceding claim, wherein the sliding plate (7) extends within the path (9) described by said rake wheel (2), in particular by its rake prongs (5).

3. Hay-making machine in accordance with one of the preceding claims, wherein the sliding plate (7) extends arcuately around the rake wheel axis (2) and/or has a scythe-shaped or U-shaped contour in a plan view.

4. Hay-making machine in accordance with one of the preceding claims, wherein the sliding plate (7) has a width (10) transversely to the direction of travel (8) that amounts to at least 50%, preferably 70% to 99%, of the inner diameter (11) of the path (9) described by the rake wheel (2).

5. Hay-making machine in accordance with one of the preceding claims, wherein the sliding plate (7) has a contact patch (12) whose size amounts to at least 20% of the inner circle area (13) inscribed by the rake wheel (2).

6. Hay-making machine in accordance with one of the preceding claims, wherein the sliding plate (7) extends over a sector (14) of the rotary circle of the rake wheel (2) that includes the straight line (8) in the direction of travel passing through the rake wheel axis (3) and that extends over an angle (15) of at least 90°, preferably of more than 120°.

7. Hay-making machine in accordance with one of the preceding claims, wherein the lower side of the sliding plate (7) forms an essentially planar contact patch (12) that optionally has a chamfer at the marginal side and/or an upward bend at the marginal side to avoid penetration.

8. Hay-making machine in accordance with one of the preceding claims, wherein the contact patch (12) of the sliding plate (7) is configured as continuous and/or in one piece.

9. Hay-making machine in accordance with one of the claims 1 to 7, wherein the contact patch (12) of the sliding plate (7) is formed in multiple parts.

10. Hay-making machine in accordance with one of the preceding claims, wherein wear elements, preferably in the form of sliding rails, are provided at the lower side of the sliding plate (7).

11. Hay-making machine in accordance with one of the preceding claims, wherein the sliding plate (7) is formed in multiple parts and comprises a base plate and a cover part upwardly covering the base plate.

12. Hay-making machine in accordance with one of the preceding claims, wherein the sliding plate (7) is suspended in a yielding manner, in particular elastically, with a sliding plate suspension (16) preferably comprising suspension points laterally to the right and to the left and to the front of the rake wheel axis (3).

## Revendications

1. Faneuse, en particulier giro-andaineur, comprenant au moins une roue à fourches (2) qui peut être entraînée en rotation autour d'un axe de roue à fourches (3) vertical, et qui est supportée au sol par un mécanisme de déplacement palpeur (6), qui comporte un plateau de glissement (7) pour l'appui plan sur le sol, **caractérisée en ce que** au moins une roue palpeur dépassant vers le bas au-delà de la surface de contact au sol (12) du plateau de glissement (7) est prévue sur la face inférieure du plateau de glissement (7).

2. Faneuse selon la revendication précédente, dans laquelle le plateau de glissement (7) s'étend à l'intérieur de la trajectoire circulaire (9) décrite par ladite roue à fourches (2), en particulier par ses dents de fourche (5).

3. Faneuse selon l'une des revendications précédentes, dans laquelle le plateau de glissement (7) s'étend en forme d'arc autour de l'axe de roue à fourches (2) et/ou possède un contour en forme de croissant ou en forme de U dans une vue de dessus.

4. Faneuse selon l'une des revendications précédentes, dans laquelle le plateau de glissement (7) possède, transversalement au sens de la marche (8), une largeur (10), qui correspond à au moins 50 %, de préférence 70 % à 99 %, du diamètre intérieur (11) de la trajectoire circulaire (9) décrite par la roue à fourches (2).

5. Faneuse selon l'une des revendications précédentes, dans laquelle le plateau de glissement (7) possède une surface de contact au sol (12), dont la dimension correspond à au moins 20 % de la surface de cercle intérieur (13) incluse par la roue à fourches (2).

6. Faneuse selon l'une des revendications précédentes, dans laquelle le plateau de glissement (7) s'étend sur un secteur (14) du cercle de rotation de la roue à fourches (2), qui inclut la ligne droite du sens de la marche (8) passant par l'axe de roue à fourches (3) et qui s'étend sur un angle (15) d'au moins 90°, de préférence plus de 120°.

7. Faneuse selon l'une des revendications précédentes, dans laquelle la face inférieure du plateau de glissement (7) forme une surface de contact au sol (12) sensiblement plane, qui comporte le cas échéant un chanfrein côté bord et/ou une courbure côté bord afin d'éviter tout enfoncement.

8. Faneuse selon l'une des revendications précédentes, dans laquelle la surface de contact au sol (12) du plateau de glissement (7) est réalisée de manière continue et/ou d'une seule pièce.

9. Faneuse selon l'une des revendications 1 à 7, dans laquelle la surface de contact au sol (12) du plateau de glissement (7) est réalisée en plusieurs parties.

10. Faneuse selon l'une des revendications précédentes, dans laquelle des éléments d'usure, de préférence sous la forme de bandes de glissement, sont prévus sur la face inférieure du plateau de glissement (7).

11. Faneuse selon l'une des revendications précédentes, dans laquelle le plateau de glissement (7) est réalisé en plusieurs parties et comprend une plaque de fond et une partie de couvercle recouvrant la plaque de fond vers le haut.

12. Faneuse selon l'une des revendications précédentes, dans laquelle le plateau de glissement (7) est suspendu de manière souple, en particulier élastique, une suspension de plateau de glissement (16) comprenant de préférence des points de suspension latéralement à droite et à gauche et devant l'axe de roue à fourches (3).
